# EUROPEAN PATENT SPECIFICATION

(11) **EP 2 866 577 B1**
(45) Date of publication and mention of the grant of the patent: **24.07.2019**
(21) Application number: 13742764.7
(22) Date of filing: 06.06.2013
(51) Int. Cl.: A23D 9/02, A23D 7/015, A21D 2/16, A21D 2/18, A23G 1/36

(54) **METHOD OF PREPARING AN EDIBLE OLEOGEL**
VERFAHREN ZUR HERSTELLUNG EINES ESSBAREN OLEOGELS
PROCÉDÉ DE PRÉPARATION D'UN OLÉOGEL COMESTIBLE

(30) Priority: 28.06.2012 US 201261665444 P; 12.07.2012 US 201261670908 P
(43) Date of publication of application: 06.05.2015
(73) Proprietor: Dow Global Technologies LLC, Midland, MI 48674 (US)
(72) Inventor: ERGUN, Roja, Midland, MI 48640 (US); THOMSON, Bradley, S., Farmington Hills, MI 48334 (US); WALLICK, David, E., Midland, MI 48640 (US); MEUNIER, David, M., Midland, MI 48642 (US)
(74) Representative: f & e patent
(86) International application number: PCT/US2013/044461
(87) International publication number: WO 2014/004018

(56) References cited:
- WO-A1-2010/143066
- WO-A1-2010/143067
- WO-A1-2012/071651
- GB-A- 2 485 421
- GAUTHIER P ET AL: "Novel glyceride gels II. Viscosity characteristics", INTERNATIONAL JOURNAL OF COSMETIC SCIENCE, KLUWER ACADEMIC PUBLISHERS, DORDRECHT, NL, vol. 18, 1 October 1996 (1996-10-01), pages 229-235, XP002093987, ISSN: 0142-5463
- ANDREW J GRAVELLE ET AL: "Ethylcellulose oleogels: Manufacturing considerations and effects of oil oxidation", FOOD RESEARCH INTERNATIONAL, ELSEVIER APPLIED SCIENCE, BARKING, GB, vol. 48, no. 2, 24 May 2012 (2012-05-24), pages 578-583, XP028499618, ISSN: 0963-9969, DOI: 10.1016/J.FOODRES.2012.05.020 [retrieved on 2012-05-24]
- ALEJANDRO G. MARANGONI: "Organogels: An Alternative Edible Oil-Structuring Method", JOURNAL OF THE AMERICAN OIL CHEMISTS' SOCIETY, vol. 89, no. 5, 1 May 2012 (2012-05-01), pages 749-780, XP055090196, ISSN: 0003-021X, DOI: 10.1007/s11746-012-2049-3

## Description

The present invention relates to a method of preparing an edible oleogel comprising triacylglycerol oil or fat and ethylcellulose.

Structure in solid fat-containing food products is provided by the network of crystalline triacylglycerols. However, these triacylglycerols contain high levels of saturated fatty acids. Instead of using naturally highly saturated solid fats, oils comprising triacylglycerols having high levels of unsaturated fatty acids are also transformed to more solid products by hydrogenation or partial hydrogenation. "Trans fats" which are unsaturated fats with trans-isomer unavoidably emerge from partial hydrogenation of unsaturated oils. Research into the role fats and oils play in human health has indicated that consumption of saturated fatty acids, even more of trans fatty acids is associated with elevated cholesterol levels and cardiovascular diseases.

Therefore, it is desirable to develop healthier alternatives to triacylglycerols containing saturated or partially hydrogenated fatty acids. The demand for a healthy alternative to trans fats and saturated fats creates technological hurdles for the food manufacturing industry. It is difficult to eliminate trans and saturated fats from a food formulation where the goal is to transform a healthier unsaturated oil, which is liquid at room temperature to a fat, which is 'solid' at room temperature to enhance the texture and appearance of a food product.

In the food industry there have been many attempts to find alternative components that can provide the desired features of texture, structuring, stability and taste that are normally found in animal and vegetable fats or hydrogenated oils. One alternative, organogels (oleogels), have been recognized for their potential to be used to reduce oil migration in multi component foods and to act as an alternative to butter or margarine. Oleogels can be used to provide structure to edible oils thereby reducing the need for saturated and trans fatty acids.

US-B-6,187,323 describes pharmaceutical and cosmetic compositions comprising a mixture of an oleogel and an aqueous gel. In the example a semisynthetic triglyceride is gelled with ethylcellulose in the presence of propylene glycol isostearate by stirring the components at 140°C until a uniform oleogel is formed.

WO 2008/081175 describes compositions containing an active agent for cosmetic and pharmaceutical applications, similar to those of US-B-6,187,323. The compositions are homogeneous mixtures (not emulsions) of an oil component with an aqueous component. In the example a synthetic oil is gelled with a combination of propylene glycol laurate, ethylcellulose and propylene glycol isostearate at ambient temperature prior to mixing with the aqueous component. The aqueous component is gelled with a conventional cosmetic gelling agent.

An article by Andrew J. Gravelle et al. ("Ethylcellulose oleogels: Manufacturing considerations and effects on of oil oxidation", Food Research International 48 (2012) 578-583) is focused on the effects of oil oxidation during manufacturing of ethylcellulose oleogels.

In "Influence of the concentration of a gelling agent and the types of surfactant on the rheological characteristics of oleogel" (Il farmaco 58 (2003) 1289-1294) M. A. RuiMartinez et al. report on oleogels comprising olive oil, ethylcellulose and a surfactant selected from Olivem 300, 700 and 900. The oleogels were prepared by stirring the components at 100°C and are destined for topical use only.

US-A-4,098,913 describes edible fat particles for incorporation into textured protein meat analog products. The edible fat products are made by gelling a triacylglyceride fat or oil with ethylcellulose. In the example partially hydrogenated cottonseed oil is mixed under rapid stirring with ethylcellulose at 180 °C. The gelled fat is then added to the meat analog product. US-A-4,098,913 is focused on a meat substitute having a meat-like texture. The problem of healthiness is not addressed and the partially hydrogenated oil used in the example does not avoid the presence of trans fatty acids and is thus undesirable in terms of healthiness.

WO 2010/143066 relates to an edible oleogel comprising an oil, ethylcellulose and a surfactant. It is describes that the oleogel is obtained by heating the ethylcellulose and the surfactant in oil up to a temperature above the glass transition temperature of the ethylcellulose with constant mixing. Suitably, the mixture is heated up to at least 130 °C to about 160 °C and after a few minutes a clear and very viscous solution is formed. Although WO 2010/143066 is not precise about the role of the surfactant and its teaching is in contrast to its two priority applications US 61/213, 480 and US 61/213,738 the surfactant seems to act as a plasticizer. Its presence is mandatory and makes the essence of the invention described.

However, for many applications the addition of a surfactant to an edible product is to be avoided, for example because many surfactants are suspected to cause allergic reactions or other health and behavioral problems. Consumers tend to become more and more critical of additives to food products and often prefer a product containing as few non-natural ingredients as possible.

The problem underlying the present invention is to provide a new method of preparing a solid or semi-solid fat product comprising healthy unsaturated fatty acids which method does not necessitate the addition of a surfactant.

The problem is solved by a method of preparing an edible oleogel comprising:
combining an edible triacylglycerol oil or triacylglycerol fat and ethylcellulose in a weight ratio of from 99:1 to 80:20 to form a mixture, and
heating and agitating the mixture at a temperature within the range of from 140 to 200 °C for 20 to 90 min to form an oleogel,
wherein the edible triacylglycerol oil or triacylglycerol fat has a iodine value of at least 30 and the heating and agitating is conducted under an inert atmosphere.

The present invention is also directed to the oleogel obtainable by said method wherein the mixture is heated and agitated at a temperature of from 145 to 160 °C for 30 to 60 min and wherein the oleogel does not contain any emulsifier or surfactant in addition to ethylcellulose and the edible triacylglycerol oil is selected from canola oil, corn oil, flaxseed oil, palm oil, olive oil, soybean oil, safflower oil, peanut oil, grape seed oil, sesame oil, argan oil, rice brain oil, algal oil, echium oil, squid oil, salmon oil, halibut oil, fractions and mixtures thereof and its use to prepare food products.

Preparing the oleogel, the triacylglycerol oil or fat and ethylcellulose are employed in a weight ratio of from 99:1 to 80:20, preferably from 95:5 to 85:15, more preferably from 92:8 to 87:13, and most preferably in a weight ratio of about 90:10.

Typically, the oleogel comprises from 70 to 99 % by weight, preferably from 75 to 95 % by weight, more preferably from 80 to 92 % by weight and most preferably from 85 to 90 % by weight of the triacylglycerol oil or fat.

The triacylglycerol oil or fat can be a natural, synthetic or semi-synthetic oil or fat. In preferred embodiments it is a fat or oil of natural origin such as a vegetable or animal oil or vegetable or animal fat, typically the triacylglycerol is a vegetable oil or fat. The term triacylglycerol oil designates triacylglycerols that are liquid at 20 °C and atmospheric pressure (1013.25 hPa) whereas triacylglycerol fats are solid or semi-solid at 20 °C and atmospheric pressure (1013.25 hPa). The liquid nature of triacylglycerol oils is due to their higher content of healthier mono- or polyunsaturated fatty acids which prevent an arrangement in a crystalline structure. The oleogel of the present invention preferably contains triacylglycerol oil(s). The triacylglycerol(s) oils or fats for use in the present invention have a iodine value of at least 30, more preferably the oleogel contains triacylglycerol oil(s) having a iodine value of at least 70 and in certain embodiments of at least 80. The iodine value is determined according to method AOCS Official Method Cd 1-25 (Wijs method).

Exemplary triacylglycerol oils that can be employed in the inventive oleogel include canola oil, sunflower oil, corn oil, flaxseed oil, olive oil, soybean oil, safflower oil, peanut oil, grape seed oil, sesame oil, argan oil, rice brain oil, algal oil and echium oil. Exemplary triacylglycerol fats for use in the present invention are cocoa butter and palm oil. Examples of animal oils include squid oil and fish oils such as salmon oil and halibut oil. Mixtures of various triacylglycerol oils and fats (including mixtures of at least two different oils, mixtures of at least two different fats and mixtures of at least one oil and at least one fat) as well as fractions and mixtures of fractions of triacylglycerol oils and fats can also be employed. In most preferred embodiments the present oleogel contains at least one of canola oil olive oil, palm oil, cocoa butter, flaxseed oil and sunflower oil.

Preferably, the ethylcellulose for use in the present invention has a degree of substitution (DS) of from 2.40 to 3, preferably from 2.42 to 2.80, more preferably from 2.43 to 2.70, even more preferably from 2.44 to 2.65, still more preferably from 2.45 to 2.60, and most preferably from 2.46 to 2.57. In typical embodiments the ethylcellulose, including ethylcellulose having the preferred DS described before, has a 5 % solution viscosity of from 3 to 110 mPa·s, preferably from 16 to 76 mPa·s, and more preferably from 18 to 50 mPa·s. The term "5 % solution viscosity" refers to the viscosity of a 5 % by weight solution of the ethylcellulose in a mixture of toluene/ethanol in a weight ratio of 80/20. The viscosity is determined at 25 °C in an Ubbelohde viscometer. A typical viscosity analysis is performed as follows: 57 g of a 80/20 w/w toluene/ethanol mixture are weighed into a dry 8-ounce bottle and 3 g (dry weight) of ethylcellulose are added. The bottle is placed on a mechanical shaker and shaken until all material goes into solution (approximately 20 min). The resulting solution is analyzed within 24 h of preparation. For viscosity measurement, the solution is filled in a Ubbelohde viscometer which is then placed in a water bath at 25 °C until the solution has equilibrated to 25 °C. Following the instruction for the Ubbelohde viscometer the solution is sucked up through the calibration flow tube and then allowed to drain. The time of the flow between the upper and lower calibration mark is stopped and the viscosity is calculated according to the instruction taking into account the specific capillary used for the measurement.

The values of the 5 % solution viscosities reflect the molecular weight of the ethylcellulose.

Exemplary ethylcelluloses that can be used in the method of the present invention include ETHOCEL™ Std. 4, ETHOCEL™ Std. 7, ETHOCEL™ Std. 10, ETHOCEL™ Std. 14, ETHOCEL™ Std. 20, and ETHOCEL™ Std. 45, all commercially available from The Dow Chemical Company, Midland, U.S.A. ETHOCEL™ Std. 20 (DS = 2.46 to 2.57, 5 % solution viscosity = 18 - 22 mPa·s) and ETHOCEL™ Std. 45 (DS = 2.46 to 2.57, 5 % solution viscosity = 41 - 49 mPa·s) are most preferred. Combinations of the exemplary ethylcelluloses can also be used.

In the inventive method the mixture comprising the triacylglycerol oil or fat and the ethylcellulose is heated and agitated, preferably stirred, at a temperature within the range of from 140 to 200°C, typically from 140 to 170 °C, more typically from 143 to 160 °C. The heating times (holding times) range from 20 to 90 min, preferably from 20 to 80 min, more preferably from 20 to 60 min, and most preferably from 30 to 40 min until an oleogel is formed. It is known to the person skilled in the art that higher temperatures require only short holding times whereas lower temperatures require longer holding times. The mixture is heated and agitated at a temperature of from 140 to 200 °C for 20 to 90 min, such as at a temperature of from 145 to 160 °C for 30 to 60 min. The specific temperature and holding time depend on the type of ethylcellulose (i.e. its molecular weight) and the type of oil or fat. The stage of solubilization of the ethylcellulose in the triacylglycerol oil/fat is typically determined by feel with hand inspection. If the resulting oleogel has a grainy/sandy texture at about 23 °C then the ethylcellulose was not fully soluble. If the oleogel gel has a smooth texture at about 23 °C the ethylcellulose is considered soluble at the processing temperature.

It is essential for the present invention that heating and agitating is conducted under an inert atmosphere such as under an inert gas atmosphere or in ambient air under vacuum (reduced pressure). Examples of inert gases that may be used according to the present invention include nitrogen and noble gases such as for example argon. It is preferred to conduct the heating and agitating under a nitrogen gas atmosphere. Processing under an inert atmosphere is applied to reduce, preferably minimize and most preferably substantially exclude the presence of oxygen. In practice, the inert atmosphere may still contain minor amounts of oxygen. Typically, the inert atmosphere has an oxygen level of less than 90 g oxygen /m³ of the atmosphere, preferably less than 50 g/m³, more preferably less than 30 g/m³, even more preferably less than 25 g/m³ and most preferably less than 23 g/m³. Vacuum conditions that may be applied are, for example, subpressures within the range of from 70 to 1 kPa, preferably from 30 to 2 kPa, and most preferably from 10 to 2.5 kPa.

Any technique to create an inert gas atmosphere may be applied in the present invention including continuously purging the system containing the mixture of triacylglycerol oil or fat and ethylcellulose with an inert gas such as nitrogen, e.g. with a continuous gas flow, in order to drive out air and ensure that air is not reintroduced into the system. It is also possible evacuate the system to remove the air before the inert gas is flown into the system. If an inert gas atmosphere is used the heating and agitating are typically conducted under ambient pressure such as at pressures within the range of from 900 to 1100 hPa, preferably from 950 to 1060 hPa. However, overpressures of up to 10,500 hPa could also be applied.

In preferred embodiments the triacylglycerol oil or fat and the ethylcellulose are combined by introducing them into the system such a reactor, e.g. a glass reactor. Typically, the mixture is already agitated and the system is purged with the inert gas, e.g. by flowing the inert gas such as nitrogen through the system, to create an inert atmosphere prior to heating and the inert gas purge is continued during heating up.

After heating and agitating the mixture under inert atmosphere at the temperatures described above the oleogel is preferably cooled, e.g. allowed to cool, typically to ambient temperature, for example to a temperature of less than 30 °C or to a temperature equal to or less than 25 °C or to a temperature of equal to or less than 23 °C or to a temperature of equal to or less than 20 °C. It is preferred that the cooling is also conducted under an inert atmosphere such as under a nitrogen atmosphere. In preferred embodiments the inert gas purge, i.e. the inert gas flow through the system, is continued during cooling.

When the mixture is heated above the glass transition temperature of the ethylcellulose, the ethylcellulose is solubilized in the triacylglycerol oil or fat to create a three-dimensional, thermo-reversible gel network upon cooling. Due to the restricted mobility and migration of the oil/fat inside the polymer network, the present oleogels provide the solid-like properties of crystalline triacylglycerols without the high levels of saturated fatty acids. Replacing crystalline triacylglycerols with healthy oils/fats while retaining structural properties of solid fats is highly desirable for various food applications.

It has been observed that too low temperatures and/or insufficient holding times result in an unacceptable sandy texture of the resulting oleogel. It is believed that this is due to incomplete disentanglement of the ethylcellulose polymer molecules. Unfortunately, it has been further observed that the oil/fat comprising unsaturated fatty acids easily oxidize if held at such high temperatures of at least 80 °C or 90 °C, or even at least 130 °C or 140 °C for the required holding times and rapidly become rancid, developing an unpleasant odor and flavor. According to the present invention the oleogels are manufactured under an inert atmosphere to prevent oxidation during solubilization. A significant reduction in the level of oxidation in oleogels that are manufactured by the inventive process is shown. No unpleasant odor or flavor is detected in various foods, when formulated with oleogels prepared according to the present method.

Although a stabilizer is not necessary to prepare the oleogel according to the present invention it may be added in certain embodiments to modify the properties of the oleogel such as to increase its firmness. Examples of stabilizers that may be used in the present method are food grade surfactants and emulsifiers such as polyoxyethylene sorbitan monooleate (Tween 80 or Polysorbate 80); polyoxyethylene sorbitan tristearate (Tween 65 or Polysorbate 65); polyoxyethylene sorbitan monostearate (Tween 60 or Polysorbate 60); sorbitan monooleate (SMO or Span 80); sorbitan monostearate (SMS or Span 60); glyceryl monooleate (GMO); glyceryl monostearate (GMS); glyceryl monopalmitate (GMP); polyglycerol esters such as polyglyceryl ester of lauric acid - polyglyceryl polylaurate (PGPL), polyglyceryl ester of stearic acid - polyglyeryl polystearate (PGPS), polyglyceryl ester of oleic acid - polyglyceryl polyoleate (PGPO)and polyglyceryl ester of ricinoleic acid - polyglyceryl polyricinoleate (PGPR); diglycerides; monoglycerides, such as succinylated monoglyceride, lactylated monoglyceride, acetylated monoglyceride, monoglyceride citrate, monoglyceride phosphate, stearyl monoglyceride citrate, and diacetyl-tartrate ester of monoglyceride; calcium stearoyl lactylate; sodium stearoyl lactylate; sucrose esters; lecithin; and triethyl citrate. If added, the stabilizer is preferably present in an amount resulting in a weight ratio of ethylcellulose/stabilizer of no more than 20:1. The typical range is a 8:1 to 1:8 w/w ethylcellulose-to-stabilizer ratio, such as for example a ratio of from 5:1 to 1:1.

In preferred embodiments the inventive oleogel does not contain any emulsifier or surfactant in addition to ethylcellulose, i.e. no emulsifier or surfactant is added during preparation.

The oleogel of the present invention may contain additional optional ingredients such as antioxidants to further reduce oxidation. As a matter of fact the antioxidants should be food grade; exemplary antioxidants for use herein include Butylated Hydroxyanisole (BHA), Butylated Hydroxytoluene (BHT), Tertiary Butyl Hydroquinone (TBHQ), ascorbic acid, sodium ascorbate, calcium ascorbate, β-carotene, tocopherols, chlorogenic acids, gallates and flavanols. If used, antioxidants are typically added in an amount of up to 10,000 ppm by weight, preferably within a range of from 50 to 1000 ppm by weight, and more preferably within a range of from 100 to 500 ppm by weight, based on the total amount of triacylglycerol oil(s) and fat(s).

The oleogels of the present invention are edible. They can be formulated into any food product requiring a structured solid-like or semi-solid like fat. A food product comprising an oleogel according to the invention is described. The food product may be made by mixing food components with an oleogel according to the invention. The mixing may be performed with the oleogel in the gelled state, or with the oleogel composition in the molten state followed by cooling.

The term "food product" herein refers to edible products suitably also containing one or more additional ingredients such as selected from carbohydrates (e.g. sugars and starches), proteins, dietary fiber, water, flavoring agents such as salt, colorants, and vitamins. Typically, the food product contains at least about 1 % by weight of the oleogel, for example at least about 5 % by weight, at least about 10 % by weight or at least about 15 % by weight of the oleogel. In some embodiments the food product contains less than 95 % by weight of the oleogel, for example less than about 90 % by weight of the oleogel. Examples of food products that can be prepared by using the present oleogel include baked goods such as cookies and cakes; spreads such as margarine and chocolate spreads; chocolate and fillings.

In certain embodiments, the food product n is a meat product. For example, a ground meat product such as hamburger meat, or a meat emulsion product such as bologna, mortadella, frankfurters, or other sausage products. Typically, the meat products of the invention comprise from 10 to 25 % by weight of protein, from 5 to 35 % by weight of fat (including oils and oleogels), and from 40 to 60 % by weight of total water. Replacement of a fraction of the animal fat present in such products by oils, suitably vegetable oils, results in meat products having an unacceptably hard, chewy and/or gummy texture when cooked. However, replacement of a fraction of the animal fat by an oleogel according to the present invention has been found to result in meat products that do not exhibit these drawbacks.

Some embodiments of the invention will now be described in detail in the following examples wherein all parts and percentages are by weight unless otherwise specified.

### EXAMPLES

**Raw Materials:**

| Ingredient | Supplier |
|---|---|
| ETHOCEL™ Std. 20 (ethylcellulose) | The Dow Chemical Company, Midland, MI, USA |
| ETHOCEL™ Std. 45 (ethylcellulose) | The Dow Chemical Company, Midland, MI, USA. |
| Canola oil | Dow AgroSciences Indianapolis, IN, USA |
| Cocoa butter | ADM, Milwaukee, Wisconsin, USA |
| Flaxseed oil | Jedwards International Inc., Quincy, MA, USA |
| Sunflower oil | Jedwards International Inc., Quincy, MA, USA |
| Olive oil | Jedwards International Inc., Quincy, MA, USA |
| Tocopherol (W530066 - mixture of D-α, D-β, D-δ, and D-γ-tocopherols) | Sigma Aldrich, St Louis, MO, USA |

### Example 1

75 g of ethylcellulose (ETHOCEL™ Std. 20) and 675 g of canola oil were weighed and placed in a glass reactor. While the ethylcellulose and the oil were being stirred nitrogen flowed through the reactor to remove air and create a nitrogen environment (oxygen level of less than 23 g/m³) prior to heating. The mixture was heated to 150 °C while stirring at 200 rpm and held at that temperature for 60 min under continued stirring. At the end of the holding time, the resulting solution was allowed to cool to ambient temperature of about 25 °C. Nitrogen was flowed through the reactor during the heating and cooling process to ensure oxygen would not be introduced to the system.

### Comparative Example 2

In Comparative Example 2 the procedure of Example 1 was followed except that it was conducted under air, i.e. no nitrogen was flowed through the reactor.

### Examples/Comparative Examples 3 to 15

In these examples the procedure of Example 1/Comparative Example 2 was followed except that ETHOCEL™ Std. 45 was used instead of ETHOCEL™ Std. 20 and the heating temperature was 160 °C for a holding time of 40 min. Different oils were employed instead of canola oil as reported in the table below. In Comparative Example 4 and Example 6 tocopherol was added to the reactor during heating up (at about 63 °C) as an antioxidant in an amount of 0.135 g to 750 g of the mixture of ETHOCEL™ Std. 45 and oil.

Example 7 was prepared under vacuum conditions by pulling a vacuum (15 inch Hg) on the glass reactor during stirring und prior to heating. After 5 min of agitation under vacuum, the mixture was heated up to 160 °C and the target temperature was held for 40 min. When allowing cooling down the reactor, vacuum was removed at about 80 °C and the reactor was inerted with nitrogen.

### Test Results and Discussion

### Headspace Gas Chromatography - Volatiles

Headspace GC/MS and GC/FID were used to identify and monitor the levels of volatiles in Example 1 and Comparative Example 2.

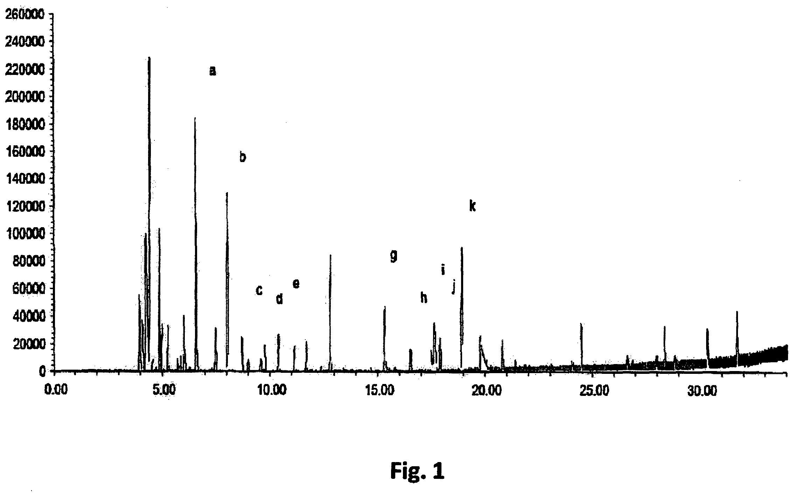

Fig. 1 is a GC/MS chromatogram of a 10/90 (w/w) mixture of ETHOCEL™ Std. 20 and canola oil after heating to 150 °C in sealed headspace vial for 60 min.

Several aldehydes and alcohols (volatiles) were identified as decomposition products of the oil as follows:

| | | |
|---|---|---|
| a: hexanal | e: pentanol | i: 1-octen-3-ol |
| b: 1-penten-ol | f: heptenal | j + k: heptadienal |
| c: heptanal | g: nonanal | l: decenal |
| d: hexenal | h: 2-octenal | |

Most of the identified compounds are recognized as oxidation products of vegetable oils and are often associated with odor and taste.

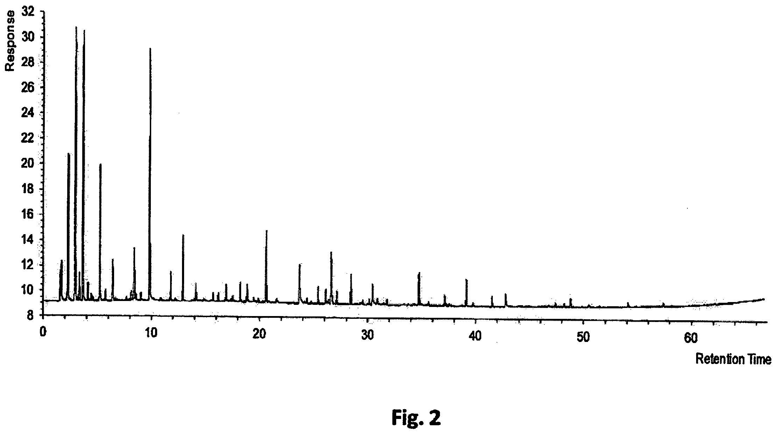

Fig. 2 is a GC-FID chromatogram of Comparative Example 2.

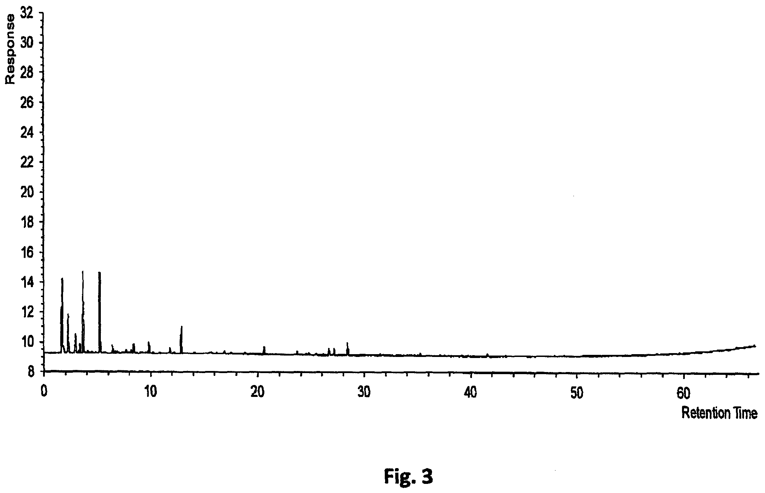

Fig. 3 is a GC-FID chromatogram of Example 1.

It is evident from the figures that the levels of volatiles were dramatically affected by the presence of air. For Example 1 according the present invention and conducted under an inert (nitrogen) environment the levels of volatiles were 10-25 fold lower than with an air environment (Comparative Example 2).

### Peroxide and p-Anisidine Values

The oxidation process can be divided into two phases: In the first phase of the oxidation fatty acids react with oxygen to form odorless compounds such as peroxides while in the second phase peroxides degrade into various substances that are responsible for the rancid odor and smell. The peroxide value (PV) test can be used to determine the primary oxidation products while the p-anisidine test can be used for measuring the secondary products. The latter method determines the amount of aldehydes (principally 2-alkenals and 2,4-dienals) by reaction in an acetic solution of the aldehydic compounds and the p-anisidine. The PV and the p-anisidine value (p-AV) can be combined to evaluate the oxidation level of the oil samples: With the PV the oxidative the status of the product can be determined while with the p-AV the oxidative history of the product can be determined.

Peroxide and p-anisidine values of Examples/Comparative Examples 3 to 15 were determined and the p-anisidine values are reported in the table below. The peroxide values were determined by the acetic acid-chloroform method according to AOCS Official Method Cd 8-53, revised 1990 and updated 1992. The p-AV value is defined by convention as 100times the optical density measured at 350 nm in a 1 cm cell of a solution containing 1.00 g of the oil/fat in a 100 ml mixture of chloroform and a solution of p-anisidine in glacial acetic acid according to AOCS Official Method Cd 18-90 (AOCS Official Method Cd 18-90 uses isooctane whereas herein chloroform is used because it is a good solvent for ethylcellulose). The peroxide values of the samples prepared both in air and nitrogen environments were close to zero. The low peroxide values suggest that the primary oxidation levels of the products were very low regardless of the environment they were prepared in.

The p-anisidine values of all the samples suggest some level of oxidative history in the samples. For most examples the p-anisidine values of the inventive oleogels prepared under nitrogen environment (Examples 5, 6, 7, 9 and 11) were at least 50 % lower than of those prepared under air environment (Comparative Examples 3, 4, 8, and 10); for Examples 13 and 15 the p-anisidine values of the inventive oleogels were about 43 and 38 % lower than of those prepared under air environment (Comparative Examples 12 and 14). These results show that the method according to the present invention decreases the oxidation significantly.

**Table: p-Anisidine values of ethylcellulose/oil samples after heat treatment at 160°C/40 min**

| | Oil | Additive | Atmosphere | p-AV |
|---|---|---|---|---|
| Reference | Canola oil (plain oil, no heat treatment) | | | 1.44 |
| Comp. Ex. 3 | Canola oil | - | air | 13.69 |
| Comp. Ex. 4 | Canola oil | tocopherol | air | 9.82 |
| Example 5 | Canola oil | - | nitrogen | 2.79⁽¹⁾ |
| Example 6 | Canola oil | tocopherol | nitrogen | 2.48 |
| Example 7 | Canola oil | - | vacuum | 3.95 |
| Reference | Cocoa butter (plain oil, no heat treatment) | | | 0.74 |
| Comp. Ex. 8 | Cocoa butter | - | air | 6.13 |
| Example 9 | Cocoa butter | - | nitrogen | 2.63 |
| Reference | Flaxseed oil (plain oil, no heat treatment) | | | 0.67 |
| Comp. Ex. 10 | Flaxseed oil | - | air | 10.4 |
| Example 11 | Flaxseed oil | - | nitrogen | 3.07 |
| Reference | Sunflower oil (plain oil, no heat treatment) | | | 6.84 |
| Comp. Ex. 12 | Sunflower oil | - | air | 29 |
| Example 13 | Sunflower oil | - | nitrogen | 16.4 |
| Reference | Olive oil (plain oil, no heat treatment) | | | 5.42 |
| Comp. Ex. 14 | Olive oil | - | air | 12 |
| Example 15 | Olive oil | - | nitrogen | 7.48 |

| | | | | |
|---|---|---|---|---|
| ⁽¹⁾ average of three samples | | | | |

## Claims

1. A method of preparing an edible oleogel comprising:
combining an edible triacylglycerol oil or triacylglycerol fat and ethylcellulose in a weight ratio of from 99:1 to 80:20 to form a mixture, and
heating and agitating the mixture at a temperature within the range of from 140 to 200 °C for 20 to 90 min to form an oleogel,
wherein the edible triacylglycerol oil or triacylglycerol fat has a iodine value of at least 30 determined according to AOCS Official method Cd 1-25 (Wijs method) and the heating and agitating is conducted under an inert atmosphere.

2. The method of claim 1 wherein the inert atmosphere is an inert gas atmosphere, preferably a nitrogen or noble gas atmosphere.

3. The method of claims 1 or 2 wherein the heating and agitating is conducted under an inert atmosphere containing less than 90 g/m³ of oxygen.

4. The method of any one of the preceding claims further comprising cooling the oleogel, preferably to a temperature of less than 30 °C, wherein the cooling is also conducted in the inert atmosphere.

5. The method of any one of the preceding claims, wherein the ethylcellulose has a degree of substitution of from 2.40 to 3.00, preferably from 2.45 to 2.60.

6. The method of any one of the preceding claims, wherein the ethylcellulose has a 5 % solution viscosity of from 3 to 110 mPa·s, preferably from 16 to 76 mPa·s, measured as a 5 % by weight solution of the ethylcellulose in a 80/20 (w/w) toluene/ethanol mixture at 25 °C in an Ubbelohde viscometer.

7. The method of any one of the preceding claims, wherein the edible triacylglycerol oil or triacylglycerol fat is of natural origin.

8. The method of any one of the preceding claims, wherein the edible triacylglycerol oil is selected from canola oil, sunflower oil, corn oil, flaxseed oil, palm oil, olive oil, soybean oil, safflower oil, peanut oil, grape seed oil, sesame oil, argan oil, rice brain oil, algal oil, echium oil, squid oil, salmon oil, halibut oil, fractions and mixtures thereof.

9. The method of any one of the preceding claims, wherein the mixture is heated and agitated at a temperature of from 145 to 160 °C for 30 to 60 min.

10. An edible oleogel obtainable by the method of any one of claims 1 to 7 wherein the mixture is heated and agitated at a temperature of from 145 to 160 °C for 30 to 60 min and wherein the oleogel does not contain any emulsifier or surfactant in addition to ethylcellulose and the edible triacylglycerol oil is selected from canola oil, corn oil, flaxseed oil, palm oil, olive oil, soybean oil, safflower oil, peanut oil, grape seed oil, sesame oil, argan oil, rice brain oil, algal oil, echium oil, squid oil, salmon oil, halibut oil, fractions and mixtures thereof.

11. Use of the oleogel of claim 10 to prepare a food product.

12. Use of claim 11, wherein the oleogel replaces at least part of a solid or semi-solid fat in the food product.

13. Use of any one of claims 11 or 12, wherein the food product is selected from baked goods such as cookies and cakes; spreads such as margarine and chocolate spreads; chocolate and fillings.

## Patentansprüche

1. Verfahren zur Herstellung eines essbaren Oleogels umfassend:
Vereinigen eines essbaren Triacylglycerol-Öls oder Triacylglycerol-Fetts mit Ethylcellulose in einem Gewichtsverhältnis von 99:1 bis 80:20, um eine Mischung auszubilden,
Erhitzen und Rühren der Mischung bei einer Temperatur innerhalb eines Bereichs von140 bis 200°C für 20 bis 90 min, um ein Oleogel zu bilden,
wobei das essbare Triacylglycerol-Öl oder Triacylglycerol-Fett eine lodzahl von mindestens 30 aufweist, bestimmt gemäß AOCS offizieller Methode Cd 1-25 (Wijs-Methode), und das Erhitzen und Rühren unter einer inerten Atmosphäre durchgeführt wird.

2. Verfahren nach Anspruch 1, in wobei die inerte Atmosphäre eine Inertgasatmosphäre, vorzugsweise eine Stickstoff- oder Edelgasatmosphäre, ist.

3. Verfahren nach Anspruch 1 oder 2, wobei das Erhitzen und Rühren in einer inerten Atmosphäre durchgeführt wird, welche weniger als 90 g/m³ Sauerstoff enthält.

4. Verfahren nach einem der vorhergehenden Ansprüche, das weiterhin das Kühlen des Oleogels, vorzugsweise auf eine Temperatur unter 30°C umfasst, wobei das Kühlen ebenfalls in einer inerten Atmosphäre durchgeführt wird.

5. Verfahren nach einem der vorhergehenden Ansprüche, wobei die Ethylcellulose einen Substitutionsgrad von 2,40 bis 3,00, vorzugsweise von 2,45 bis 2,60 aufweist.

6. Verfahren nach einem der vorhergehenden Ansprüche, wobei die Ethylcellulose eine 5%-Lösungsviskosität von 3 bis 110 mPa·s, vorzugsweise 16 bis 76 mPa·s, gemessen als 5-gew.-%ige Lösung der Ethylcellulose in einer 80/20(w/w)-Toluol/Ethanol-Mischung bei 25 °C in einem Ubbelohde-Viskosimeter aufweist.

7. Verfahren nach einem der vorhergehenden Ansprüche, wobei das essbare Triacylglycerol-Öl oder Triacylglycerol-Fett einen natürlichen Ursprung besitzt.

8. Verfahren nach einem der vorhergehenden Ansprüche, wobei das Triacylglycerol-Öl aus Rapsöl, Sonnenblumenöl, Maisöl, Leinöl, Palmöl, Olivenöl, Sojaöl, Safloröl, Erdnussöl, Traubenkernöl, Sesamöl, Arganöl, Reisöl, Algenöl, Echiumöl, Tintenfischöl, Lachsöl, Heilbuttöl, Fraktionen und Mischungen davon ausgewählt ist.

9. Verfahren nach einem der vorhergehenden Ansprüche, wobei die Mischung bei einer Temperatur von 145 bis 160°C für 30 bis 60 min erhitzt und gerührt wird.

10. Essbares Oleogel, erhältlich nach dem Verfahren eines der Ansprüche 1 bis 7, wobei die Mischung bei einer Temperatur von 145 bis 160°C für 30 bis 60 min erhitzt und gerührt wird und wobei das Oleogel keinen Emulgator oder grenzflächenaktiven Stoff zusätzlich zu Ethylcellulose enthält und das essbare Triacylglycerol-Öl aus Rapsöl, Sonnenblumenöl, Maisöl, Leinöl, Palmöl, Olivenöl, Sojaöl, Safloröl, Erdnussöl, Traubenkernöl, Sesamöl, Arganöl, Reisöl, Algenöl, Echiumöl, Tintenfischöl, Lachsöl, Heilbuttöl, Fraktionen und Mischungen davon ausgewählt ist.

11. Verwendung des Oleogels nach Anspruch 10, um ein Nahrungsmittel herzustellen.

12. Verwendung nach Anspruch 11, wobei das Oleogel zumindest einen Teil eines festen oder halbfesten Fettes in dem Nahrungsmittel ersetzt.

13. Verwendung nach einem der Ansprüche 11 oder 12, wobei das Nahrungsmittel aus Backwaren, wie etwa Keksen und Kuchen; Brotaufstrichen, wie etwa Margarine oder Schokoladenaufstrichen; Schokolade und Füllungen ausgewählt ist.

## Revendications

1. Procédé de préparation d'un oléogel comestible, qui comprend les opérations suivantes :
- combinaison d'une huile comestible du type triacylglycérol ou d'une matière grasse comestible du type triacylglycérol avec de l'éthylcellulose, en un rapport pondéral valant de 99/1 à 80/20, de manière à former un mélange,
- et chauffage sous agitation du mélange ainsi obtenu, à une température comprise dans l'intervalle allant de 140 °C à 200 °C pendant 20 à 90 minutes, de manière à produire un oléogel,
étant entendu que l'huile comestible du type triacylglycérol ou la matière grasse comestible du type triacylglycérol présente un indice d'iode d'au moins 30, cette valeur étant déterminée conformément à la méthode officielle Cd 1-25 de l'AOCS (*American Oil Chemists Society,* société américaine des chimistes de l'industrie des huiles) [méthode Wijs], et l'opération de chauffage sous agitation est menée sous une atmosphère inerte.

2. Procédé selon la revendication 1, dans lequel l'atmosphère inerte est une atmosphère de gaz inerte, et de préférence une atmosphère d'azote ou de gaz rare.

3. Procédé selon la revendication 1 ou la revendication 2, dans lequel l'opération de chauffage sous agitation est menée sous une atmosphère inerte présentant une teneur en oxygène de moins de 90 g/m³.

4. Procédé selon l'une quelconque des revendications précédentes, qui comporte par ailleurs une opération de refroidissement de l'oléogel, de préférence à une température de moins de 30 °C, cette opération de refroidissement étant également effectuée sous l'atmosphère inerte.

5. Procédé selon l'une quelconque des revendications précédentes, dans lequel l'éthylcellulose présente un degré de substitution valant de 2,40 à 3,00, et de préférence de 2,45 à 2,60.

6. Procédé selon l'une quelconque des revendications précédentes, dans lequel l'éthylcellulose présente une viscosité en solution à 5 % valant de 3 à 110 mPa·s, et de préférence de 16 à 76 mPa·s, cette valeur étant déterminée avec un viscosimètre Ubbelohde sur une solution à 5 % d'éthylcellulose dans un mélange de toluène et d'éthanol en un rapport de 80/20 (poids/poids), à une température de 25 °C.

7. Procédé selon l'une quelconque des revendications précédentes, dans lequel l'huile comestible du type triacylglycérol ou la matière grasse comestible du type triacylglycérol est d'origine naturelle.

8. Procédé selon l'une quelconque des revendications précédentes, dans lequel l'huile comestible du type triacylglycérol est choisie parmi les suivantes : huile de colza du type canola, huile de tournesol, huile de maïs, huile de graines de lin, huile de palme, huile d'olive, huile de soja, huile de carthame, huile d'arachide, huile de pépins de raisin, huile de sésame, huile d'argan, huile de son de riz, huile d'algues, huile de vipérine (*Echium*), huile de calmar, huile de saumon et huile de flétan, ainsi que des fractions et mélanges de telles huiles.

9. Procédé selon l'une quelconque des revendications précédentes, dans lequel on chauffe le mélange sous agitation à une température valant de 145 °C à 160 °C pendant 30 à 60 minutes.

10. Oléogel comestible pouvant être obtenu par un procédé selon l'une quelconque des revendications 1 à 7, dans lequel on chauffe le mélange sous agitation à une température valant de 145 °C à 160 °C pendant 30 à 60 minutes, l'oléogel ne contenant aucun émulsifiant ou tensioactif en plus de l'éthylcellulose, et l'huile comestible du type triacylglycérol est choisie parmi les suivantes : huile de colza du type canola, huile de maïs, huile de graines de lin, huile de palme, huile d'olive, huile de soja, huile de carthame, huile d'arachide, huile de pépins de raisin, huile de sésame, huile d'argan, huile de son de riz, huile d'algues, huile de vipérine (*Echium*), huile de calmar, huile de saumon et huile de flétan, ainsi que des fractions et mélanges de telles huiles.

11. Utilisation d'un oléogel selon la revendication 10 pour préparer un produit alimentaire.

12. Utilisation selon la revendication 11, dans laquelle l'oléogel remplace au moins une partie d'une matière grasse solide ou semi-solide dans le produit alimentaire.

13. Utilisation selon l'une quelconque des revendications 11 et 12, dans laquelle le produit alimentaire est choisi parmi des produits de boulangerie-pâtisserie tels que biscuits et gâteaux, des produits tartinables tels que margarines et pâtes à tartiner chocolatées, des fourrages et du chocolat.
